# EUROPÄISCHE PATENTANMELDUNG

(11) **EP 1 236 931 A2**
(43) Veröffentlichungstag der Anmeldung: **04.09.2002**
(21) Anmeldenummer: 02002491.5
(22) Anmeldetag: 02.02.2002
(51) Int. Cl.: F16H 7/12

(54) **Einrichtung zum Entkoppeln von Drehungleichförmigkeiten**

(30) Priorität: 28.02.2001 DE 10109570
(71) Anmelder: INA- Schaeffler KG, 91074 Herzogenaurach (DE)
(72) Erfinder: Michael, Uwe, 90480 Nürnberg (DE)

(57) **Zusammenfassung**

Eine Einrichtung zum Entkoppeln von Drehungleichförmigkeiten insbesondere in einem mit mehreren Riemenscheiben (1, 2, 3) versehenen Riementrieb, insbesondere einer Verbrennungskraftmaschine, weist zwei über ein Verbindungselement (7) miteinander verbundene Ausgleichsrollen (5, 6) auf. Die eine Ausgleichsrolle (5) ist zur Anlage an ein Lasttrum des Riemens (4) vorgesehen. Die andere Ausgleichsrolle (6) ist zur Anlage an ein Lostrum des Riemens (4) vorgesehen. Beide Ausgleichsrollen (5, 6) sind quer zu dem Lasttrum und Lostrum auslenkbar angeordnet. Die Summe der Umschlingungwinkel (α, β) der beiden Ausgleichsrollen (5, 6) beträgt wenigstens 60 Grad.

## Beschreibung

Die vorliegende Erfindung betrifft eine Einrichtung zum Entkoppeln von Drehungleichförmigkeiten in einem mit mehreren Riemenscheiben versehenen Riementrieb.

Aus DE 195 11 188 A1 beispielsweise ist eine Vorrichtung zur Dämpfung von Drehschwingungen in einem Antriebsstrang bekannt geworden. Die Hubkolbenbrennkraftmaschine erzeugt auf der Kurbelwellenriemenscheibe Drehschwingungen, die über den Riemen auf den Riementrieb übertragen werden. Bei der dort vom Riemen angetriebenen Lichtmaschine ist zwischen Welle der Lichtmaschine und deren Riemenscheibe ein Freilauf angeordnet. In der Fase einer Verzögerung infolge der Drehungleichförmigkeit wird der Riemen gebremst, wogegen jedoch die drehträge Welle der Lichtmaschine wegen des zwischengeschalteten, nun entkoppelten Freilaufs ungebremst weiter rotieren kann. D. h., ein unerwünschtes Rutschen des Riemens auf der Riemenscheibe der Lichtmaschine während der Verzögerung der Drehungleichförmigkeit ist verhindert. Die Drehungleichförmigkeit ist also entkoppelt bzw. gedämpft worden. Die Beschleunigungsfase der Drehungleichförmigkeit wird allerdings ungedämpft an die Nebenaggregate, also hier die Lichtmaschine, weitergegeben.

Denn der Freilauf kuppelt ein, sobald die Winkelgeschwindigkeit der Riemenscheibe größer als die Winkelgeschwindigkeit der Lichtmaschinenwelle wird.

Aufgabe der vorliegenden Erfindung ist es daher, eine Einrichtung zum Entkoppeln von Drehungleichförmigkeiten anzugeben, bei der ein Entkopplungsoder Dämpfungseffekt sowohl während der Verzögerungsfase als auch während der Beschleunigungsfase der Drehungleichförmigkeit erzielt wird.

Erfindungsgemäß wird eine Einrichtung zum Entkoppeln von Drehungleichförmigkeiten in einem mit mehreren Riemenscheiben versehenen Riementrieb vorgeschlagen, wobei zwei über ein Verbindungselement miteinander verbundene Ausgleichsrollen vorgesehen sind, von denen die eine zur Anlage an ein Lasttrum des Riemens und von denen die andere zur Anlage an ein Lostrum des Riemens vorgesehen ist, wobei beide Ausgleichsrollen quer zu dem Lasttrum und Lostrum auslenkbar angeordnet sind, und wobei die Summe der Umschlingungswinkel der beiden Ausgleichsrollen wenigstens 60 Grad beträgt. In einer mittigen Anordnung der Ausgleichsrollen ist demzufolge jede Ausgleichsrolle vom Riemen über mindestens 30 Grad umschlungen. Infolge der prozessbedingten Drehungleichförmigkeit und der in dem Riementrieb installierten drehträgen Massen kommt es zu stark unterschiedlichen Belastungen im Lasttrum und im Lostrum. Bei der erfindungsgemäßen Einrichtung ist die resultierende Kraft, die an der dem Lasttrum zugeordneten Ausgleichsrolle angreift, aufgrund des großen Umschlingungswinkels so groß, dass beide Ausgleichsrollen quer zu dem Lasttrum beschleunigt werden. D. h., während dieser Beschleunigung nimmt der Umschlingungswinkel an der im Lasttrum angeordneten Ausgleichsrolle ab und nimmt gleichermaßen zu an der im Lostrum angeordneten Ausgleichsrolle. In anderen Worten ausgedrückt: Während dieser Beschleunigung wird dem Lasttrum gewissermaßen ein Stück Riemen "gegeben", wohingegen dem Lostrum gewissermaßen ein Stück Riemen "genommen" wird. In der Folge findet kein Durchrutschen zwischen dem Riemen und der Riemenscheibe eines benachbarten Nebenaggregates statt. Ohne die erfindungsgemäß vorgesehenen Ausgleichsrollen würden die stark unterschiedlichen Kräfte im Los- und im Lasttrum dazu führen, dass der Riemen an der Riemenscheibe durchrutscht.

Vorzugsweise sind die beiden Ausgleichsrollen über das Verbindungselement starr miteinander verbunden. Auf diese Weise ist sichergestellt, dass die erfindungsgemäße Summe des Umschlingungswinkels annähernd konstant bleibt. Allerdings ist es auch möglich, das Verbindungselement mit einer gewissen Elastizität auszustatten. Dies kann in vorteilhafter Weise zu einer weiteren Beruhigung des Riementrieb beitragen, auch wenn es zu größeren Abweichungen von der konstanten Summe der Umschlingungswinkel kommt.

Das Verbindungselement kann in beiden Richtungen quer zu den beiden Trums ungebremst oder gebremst auslenkbar sein. Eine leichte Dämpfung des Verbindungselementes kann dazu beitragen, zu verhindern, dass das Verbindungselement mit den daran gehaltenen Ausgleichsrollen in Eigenschwingung gerät. Die beiden Ausgleichsrollen können entlang einer vorzugsweise koaxial zur Drehachse einer der Riemenscheiben angeordneten Kreisbahn auslenkbar angeordnet sein. Beispielsweise wäre denkbar, das Verbindungselement drehbar auf der Lichtmaschinenwelle anzuordnen, wobei an von der Lichtmaschinenwelle entfernten Enden des Verbindungselementes mit Abstand zueinander die beiden Verbindungsrollen vorgesehen wären. Ebenso ist aber auch eine lineare Auslenkung der Ausgleichsrollen denkbar.

In Riementrieben von Verbrennungskraftmaschinen moderner Kraftfahrzeuge werden zunehmend Lichtmaschinen mit erhöhter Leistung eingesetzt. Oftmals haben derartige Lichtmaschinenwellen eine hohe Drehträgheit. Insbesondere bei derart drehträgen Massen sieht eine erfindungsgemäße Weiterbildung vor, dass der Abstand vom Fußpunkt einer Mittelsenkrechten einer die beiden Ausgleichsrollen verbindenden Geraden zur Drehachse der Riemenscheibe annähernd der Summe der Rollradien dieser Riemenscheibe und einer der Ausgleichsrollen entspricht. In anderen Worten ausgedrückt: Die beiden Ausgleichsrollen sind möglichst nah bei der Riemenscheibe der Lichtmaschine angeordnet. In dieser Anordnung kann der Abstand bis zum doppelten der Rollradien dieser Riemenscheibe und einer der Ausgleichsrollen betragen.

Während vorstehend die erfindungsgemäße Einrichtung im Zusammenhang mit der Riemenscheibe der Lichtmaschine beschrieben wurde, bietet sich eine gleiche Anordnung der erfindungsgemäßen Einrichtung bei einer Riemenscheibe an, die auf der Kurbelwelle angeordnet ist.

Wenn das Los- bzw. Lasttrum im Riementrieb sehr lang ist, bietet sich an, eine Zwischenrolle zur Anlage sowohl an das Lasttrum als auch an das Lostrum vorzusehen, wobei die beiden Ausgleichsrollen an der einen Umfangsseite und die Zwischenrolle an der anderen Umfangsseite des Riemens angeordnet sind. Die Zwischenrolle dient zum einen dem Zweck, freischwingende Trums zu verkürzen. Weiterhin kann der Abstand vom Fußpunkt einer Mittelsenkrechten einer die beiden Ausgleichsrollen verbindenden Geraden zur Drehachse der Zwischenrolle derart bemessen sein, dass die Summe des erfindungsgemäßen Umschlingungswinkels an den beiden Ausgleichsrollen eingestellt ist.

Vorzugsweise ist der Rollradius der Zwischenrolle größer als der Rollradius der Ausgleichsrolle. Dies ist insbesondere dann von Vorteil, wenn die Zwischenrolle innerhalb der von dem Riemen aufgespannten Fläche und die beiden Ausgleichsrollen außerhalb dieser Fläche angeordnet sind.

Nachstehend wird die Erfindung anhand von zwei in insgesamt zwei Figuren dargestellten Ausführungsbeispielen näher erläutert. Es zeigen:
- Figur 1: eine schematische Darstellung einer erfindungsgemäßen Einrichtung und
- Figur 2: eine schematische Darstellung einer weiteren erfindungsgemäßen Einrichtung.

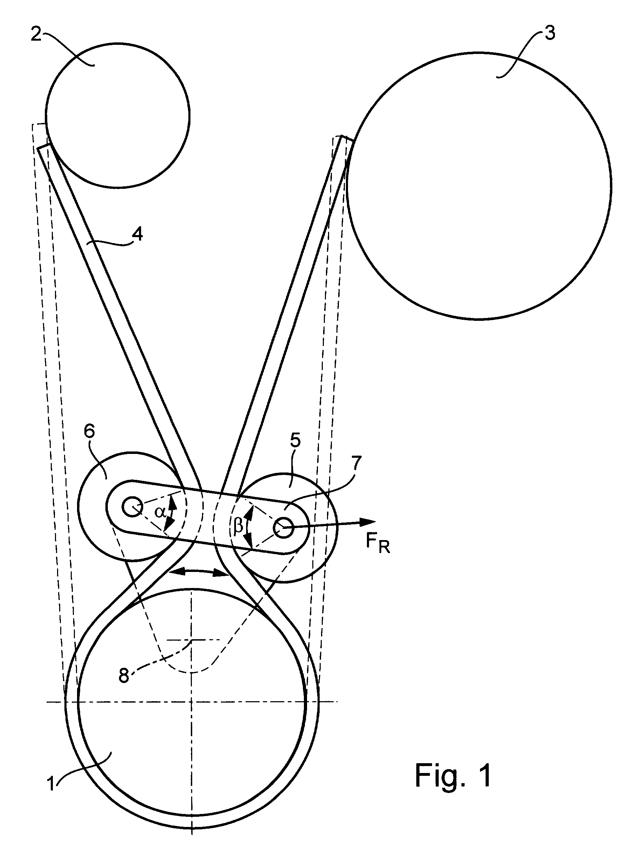

Figur 1 zeigt in schematischer Darstellung einen Riementrieb einer Verbrennungskraftmaschine, in dem eine erfindungsgemäße Einrichtung zum Entkoppeln bzw. Dämpfen von Drehungleichförmigkeiten angeordnet ist.

Mehrere im Riementrieb angeordnete Riemenscheiben 1, 2, 3 werden von einem Riemen 4 umschlungen. Die Riemenscheibe 1 kann beispielsweise auf der Welle einer nicht dargestellten Lichtmaschine oder einer Kurbelwelle befestigt sein.

Nahe bei der Riemenscheibe 1 sind zwei Ausgleichsrollen 5, 6 außerhalb der von dem Riemen 4 aufgespannten Fläche angeordnet. Es sei angenommen, dass die Ausgleichsrolle 5 an einem Lasttrum anliegt, und das die Ausgleichsrolle 6 an einem Lostrum anliegt. Beide Ausgleichsrollen 5, 6 sind auf einer Grundplatte 7 befestigt. Die Grundplatte 7 ist um eine Drehachse 8 drehbeweglich gelagert. Die Summe der Umschlingungswinkel α und β der beiden Ausgleichsrollen 6 und 7 beträgt wenigstens 60 Grad. Das bedeutet, dass die Abstände der Drehachsen der beiden Ausgleichsrollen 6, 7 zueinander und/oder zur Riemenscheibe 1 und/oder die Rollradien der Ausgleichsrollen 5, 6 und/oder der Rollradius der Riemenscheibe 1 entsprechend ausgelegt sind. Im vorliegenden Fall ist ein Abstand vom Fußpunkt einer Mittelsenkrechten einer die beiden Ausgleichsrollen 5, 6 verbindenden Geraden zur Drehachse der Riemenscheibe 1 annähernd so groß wie die Summe der Rollradien einer der beiden gleichgroßen Ausgleichsrollen 5, 6 und der Innenscheibe 1.

Im Betrieb der Brennkraftmaschine werden an der Kurbelwelle auftretende, prozessbedingte Drehungleichförmigkeiten in den Riementrieb weitergegeben. Als Folge dieser Drehungleichförmigkeit entstehen stark unterschiedliche Belastungen im Lostrum und Lasttrum des Riementriebs. Wenn beispielsweise im Lasttrum eine hohe Trumkraft anliegt, greift an der Ausgleichsrolle 5 eine resultierende Trumkraft F_{R} an. Die resultierende Kraft F_{R} nimmt zu mit der Größe des Umschlingungswinkels. Je größer der Umschlingungswinkel ist, desto größer ist die an der Ausgleichswelle 5, 6 angreifende resultierende Trumkraft F_{R}, und desto beschleunigter wird die Grundplatte 7 verlagert. Unter dieser Trumkraft F_{R} verschwenkt nun die Grundplatte 7 um die Drehachse 8, wobei der Umschlingungswinkel β abnimmt und wobei der Umschlingungswinkel α zunimmt. Das bedeutet, dass die an jeder Ausgleichsrolle 5, 6 angreifende resultierende Trumkraft auf der Seite der Ausgleichsrolle 5 abnimmt und auf der Seite der Ausgleichsrolle 6 zunimmt. Der Bewegungsablauf insgesamt hat zur Folge, dass auf der Seite des Lasttrums gewissermaßen ein Stück Riemen "freigegeben" wird, wogegen auf der Seite des Leertrums gewissermaßen ein Stück Riemen "weggenommen" wird. Dieses Freigeben und Wegnehmen von Trumstücken hat den erwünschten Effekt, dass zwischen der Riemenscheibe 1 und dem Riemen 4 kein Durchrutschen stattfindet. Der zuvor beschriebene Bewegungsablauf der Grundplatte 7 mit den daran befestigten Ausgleichsrollen 5, 6 findet ebenfalls in der entgegengesetzten Schwenkrichtung statt. Sowohl die Beschleunigungsfase als auch die Verzögerungsfase der Drehungleichsförmigkeit wird hier in vorteilhafter Weise von der drehträgen Riemenscheibe 1 abgekoppelt.

Die hier dargestellte Lage der Drehpunkte der Riemenscheibe 1 und der Grundplatte 7 geben eine stark progressive Federkennlinie des Schwenkwinkels aus der erhöhten Riemenspannung bei Schwenkbewegungen. Außerdem entsteht ein relativ harter Endanschlag bei Erreichen eines Quetschens des Riemens zwischen der Ausgleichsrolle 5 und der Riemenscheibe 1 bzw. der Ausgleichsrolle 6 und der Riemenscheibe 1, wenn ein bestimmter Schwenkwinkel erreicht wird. Dadurch wird die Charakteristik aus der Sicht der Schwingungslehre stark nichtlinear, was dazu beitragen kann, problematische Resonanzstellen zu umgehen. An der Grundplatte 7 kann eine zusätzliche Feder angreifen, die in den Schwenkrichtungen der Grundplatte 7 wirksam ist. Dadurch können der Momentenullpunkt verschoben und die Gesamtsteifigkeit des Systems bei Schwenkbewegungen um die Drehachse 8 der Grundplatte 7 verändert werden. Weiterhin kann eine Dämpfung der Schwenkbewegung der Grundplatte 7 um die Drehachse 8 sinnvoll sein, z. B. wenn die Schwenkbewegung nur in bestimmten Betriebszuständen des Riementriebs mit großen Änderungen der Riemenkraft oder Schwingungen auftreten soll. Ein Beispiel hierfür ist die Problematik des Start-/Stopp-Quietschens bei einer weichen Ankopplung des Riementriebes an die Kurbelwellenriemenscheibe, wie sie in bestimmten Anwendungen bekannt geworden ist. Beim Starten und Stoppen des Verbrennungsmotors muss eine Resonanzstelle dieser entkoppelnden Riemenscheibe durchfahren werden, was zu dem erwähnten Quietschen wegen Riemendurchrutschens führt. Die hier vorgeschlagene Lösung kann in dem Moment großer Ungleichförmigkeit die großen Amplituden aufnehmen.

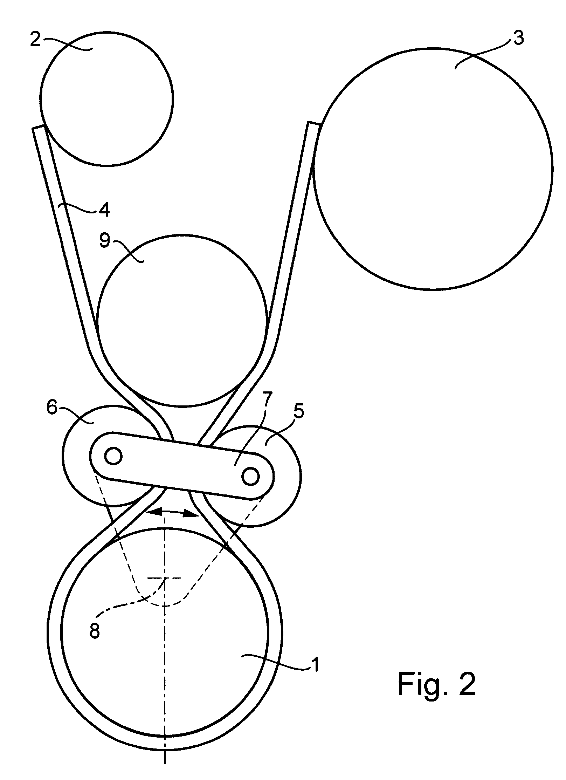

Die erfindungsgemäße Einrichtung gemäß Figur 2 unterscheidet sich von der aus der Figur 1 im Wesentlichen dadurch, dass eine zusätzliche Zwischenrolle 9 in der von dem Riemen 4 aufgespannten Fläche angeordnet ist. Diese Zwischenrolle 9 ist nahe bei den beiden Ausgleichsrollen 5, 6 derart angeordnet, dass der bereits oben erwähnte erforderliche Umschlingungswinkel (α+β) leicht eingestellt werden kann. Zu diesem Zweck braucht die Zwischenrolle 9 lediglich soweit in Richtung auf die beiden Ausgleichsrollen 5, 6 verlagert zu werden, dass der Riemen 4 so weit die Ausgleichsrollen 5, 6 umschlingt, dass der erforderliche Umschlingungswinkel eingestellt ist. Außerdem verkürzt die Zwischenrolle 9 die freischwingenden Trumstücke, die von den Riemenscheiben 2, 3 begrenzt werden.

### Bezugszahlen

- 1: Riemenscheibe
- 2: Riemenscheibe
- 3: Riemenscheibe
- 4: Riemen
- 5: Ausgleichsrolle
- 6: Ausgleichsrolle
- 7: Grundplatte
- 8: Drehachse
- 9: Zwischenrolle

## Patentansprüche

1. Einrichtung zum Entkoppeln von Drehungleichförmigkeiten insbesondere in einem mit mehreren Riemenscheiben (1, 2, 3) versehenen Riementrieb insbesondere von Verbrennungskraftmaschinen, mit zwei über ein Verbindungselement (7) miteinander verbundenen Ausgleichsrollen (5, 6), von denen die eine zur Anlage an ein Lastrum des Riemens (4) und von denen die andere zur Anlage an ein Lostrum des Riemens (4) vorgesehen ist, wobei beide Ausgleichsrollen (5, 6) quer zu dem Lasttrum und Lostrum auslenkbar angeordnet sind, wobei die Summe der Umschlingungswinkel (α, β) der beiden Ausgleichsrollen (5, 6) wenigstens 60 Grad beträgt.

2. Einrichtung nach Anspruch 1, bei der die beiden Ausgleichsrollen (5, 6) über das Verbindungselement (7) starr miteinander verbunden sind.

3. Einrichtung nach Anspruch 1, bei der das Verbindungselement (7) in beiden Richtungen quer zu den beiden Trums ungebremst oder gebremst auslenkbar ist.

4. Einrichtung nach Anspruch 1, bei der beide Ausgleichsrollen (5, 6) entlang einer - vorzugsweise koaxial zur Drehachse einer der Riemenscheiben (1, 2, 3) angeordneten - Kreisbahn auslenkbar sind.

5. Einrichtung nach Anspruch 1, bei der der Abstand vom Fußpunkt einer Mittelsenkrechten einer die beiden Ausgleichsrollen verbindenden Geraden zur Drehachse einer der Riemenscheiben (1, 2, 3) annähernd der Summe der Rollradien dieser Riemenscheibe (1, 2, 3) und einer der Ausgleichsrollen (5, 6) beträgt.

6. Einrichtung nach Anspruch 5, bei der dieser Abstand höchstens das Doppelte der Rollradien dieser Riemenscheibe (1, 2, 3) und einer der Ausgleichsrollen (5, 6) beträgt.

7. Einrichtung nach Anspruch 5, bei der diese Riemenscheibe (1, 2, 3) auf der Welle der Lichtmaschine oder der Kurbelwelle angeordnet ist.

8. Einrichtung nach Anspruch 1, bei der eine Zwischenrolle (9) zur Anlage sowohl an das Lastrum als auch an das Lostrum vorgesehen ist, wobei die beiden Ausgleichsrollen (5, 6) an der einen Umfangsseite und die Zwischenrolle (9) an der anderen Umfangsseite des Riemens (4) angeordnet sind.

9. Einrichtung nach Anspruch 8, bei der der Abstand vom Fußpunkt einer Mittelsenkrechten einer die beiden Ausgleichsrollen (5, 6) verbindenden Geraden zur Drehachse der Zwischenrolle (9) derart bemessen ist, daß die Summe des Umschlingungswinkels eingestellt ist.

10. Einrichtung nach Anspruch 8, bei der der Rollradius der Zwischenrolle (9) größer als der Rollradius der Ausgleichsrollen (5, 6) ist.

11. Riementrieb, insbesondere einer Hubkolben-Brennkraftmaschine, dessen Riemen eine treibende Riemenscheibe (3) und wenigstens eine getriebene Riemenscheibe (2, 1), insbesondere einer Lichtmaschine, umschlingt, mit einer Einrichtung zum Entkoppeln von Drehungleichförmigkeiten, welche Einrichtung zwei über ein Verbindungselement miteinander verbundene Ausgleichsrollen aufweist, von denen die eine zur Anlage an ein Lastrum des Riemens und von denen die andere zur Anlage an ein Lostrum des Riemens vorgesehen ist, wobei beide Ausgleichsrollen (5, 6) quer zu dem Lasttrum und Lostrum auslenkbar angeordnet sind, wobei die Summe der Umschlingungswinkel (α, β) der beiden Ausgleichsrollen (5, 6) wenigstens 60 Grad beträgt.
